# FASCICULE DE BREVET EUROPEEN

(11) **EP 3 119 995 B1**
(45) Date de publication et mention de la délivrance du brevet: **02.05.2018**
(21) Numéro de dépôt: 15725701.5
(22) Date de dépôt: 19.03.2015
(51) Int. Cl.: F01D 25/16, F02C 7/32

(54) **RELAIS D'ACCESSOIRES POUR MOTEUR À TURBINE À GAZ**
HILFSGETRIEBE FÜR GASTURBINENMOTOR
ACCESSORY GEARBOX FOR GAS TURBINE ENGINE

(30) Priorité: 21.03.2014 FR 1452405
(43) Date de publication de la demande: 25.01.2017
(73) Titulaire: Safran Transmission Systems, 92700 Colombes (FR)
(72) Inventeur: MORELLI, Boris, F-75014 Paris (FR); PRUNERA-USACH, Stéphane, 14197 Berlin (DE); VIEL, Julien, F-95100 Argenteuil (FR)
(74) Mandataire: Gevers & Orès
(86) Numéro de dépôt international: PCT/FR2015/050686
(87) Numéro de publication internationale: WO 2015/140476

(56) Documents cités:
- EP-A1- 1 898 072
- WO-A2-02/053403
- DE-A1-102011 101 197
- JP-A- 2006 009 929

## Description

### Domaine de l'invention

Le domaine de la présente invention est celui des turbomachines, notamment celui des moteurs à turbine à gaz destinés à la propulsion des aéronefs. L'invention porte sur les boîtiers d'entraînement des équipements accessoires associés à ces turbomachines, connus généralement sous la dénomination de relais d'accessoires ou sous la dénomination anglaise « accessory gear box » et son acronyme AGB.

### Etat de la technique

Une partie de l'énergie générée par le moteur est utilisée pour entraîner différents équipements de ce dernier. La puissance requise est prélevée mécaniquement, généralement sur l'arbre du corps haute pression du moteur à turbine à gaz, par un arbre de prise de mouvement qui est relié au fût du pignon d'entrée dans le relais d'accessoires. Le relais est monté sur le carter du moteur et il regroupe un certain nombre d'équipements ou accessoires qu'il supporte ; ce sont par exemple un générateur électrique, un alternateur, des pompes hydrauliques à carburant et à huile, un démarreur, etc.

Le relais comprend un boîtier de forme allongée à l'intérieur duquel sont montées des roues d'engrenage formant un train d'engrenages entraînant les équipements. Ces roues comportent un fût apte à être relié à l'arbre d'entraînement d'un équipement. Une des roues est reliée également à l'arbre d'entrée du relais. Les différents appareils entraînés par le relais sont montés directement sur le boîtier, et les entraînements associés passent au travers de la paroi du boîtier par des ouvertures appropriées. Les roues constituant le train d'engrenages à l'intérieur du boîtier sont généralement à axes parallèles entre eux. Selon l'art antérieur connu du présent déposant, les fût des pignons sont supportés d'un côté, par la paroi du boîtier qui est opposée à celle qui comprend l'ouverture au travers de laquelle l'équipement est entraîné, et de l'autre par la paroi comprenant l'ouverture ou bien un couvercle rapporté sur la paroi. En règle générale, le fût des pignons de la roue d'engrenage est porté d'une part par la bague extérieure d'un roulement à rouleaux ou à billes fixé sur la paroi de fond non découpée du boîtier et d'autre part par la bague externe d'un roulement à billes ou à rouleaux fixé sur le couvercle associé au dit accessoire. La roue d'engrenage est quant à elle située entre les deux roulements.

Le présent déposant a déjà proposé des améliorations, concernant ce type de relais d'accessoires, décrites par exemple dans les demandes WO2012/175884 ou EP 1.898.072.

Un tel agencement présente un certain encombrement dans la direction des axes des engrenages. Dans le cadre de l'amélioration continue de ses produits le présent déposant souhaite réduire l'encombrement selon ladite direction. Il est à noter que les roulements à rouleaux ont une capacité de désalignement qui impose un entraxe minimum, cet entraxe limite la possibilité de réduire l'épaisseur des relais. A moins d'augmenter les capacités de désalignement des rouleaux et donc de diminuer leur capacité de charge, une solution différente du montage doit être trouvée. C'est l'objectif que s'est fixé le présent déposant.

### Exposé de l'invention

Conformément à l'invention, on parvient à cet objectif avec un relais d'accessoires apte à entraîner les équipements accessoires d'un moteur à turbine à gaz, comprenant un boîtier et une pluralité de roues d'engrenages principalement à axes parallèles entre eux à l'intérieur du boîtier, le boîtier comprenant des moyens pour la fixation des équipements accessoires sur la paroi du boîtier et pour leur entraînement par les roues d'engrenages au travers d'ouvertures dans la paroi du boîtier, les roues étant supportées dans le boîtier par des paliers à roulements chaque roulement comprenant une première bague fixe par rapport au boîtier et une bague mobile solidaire de la roue, caractérisé par le fait qu'au moins une desdites roues d'engrenage est supportée par un seul palier à roulement dont la bague fixe est radialement intérieure et montée sur un axe solidaire de la paroi du boîtier. De préférence, ledit roulement est apte à reprendre les moments perpendiculaires à l'axe de rotation de la roue d'engrenage ainsi que les charges axiales et radiales.

Grâce à l'utilisation d'un palier à roulement présentant cette propriété, on assure le bon fonctionnement du relais tout en permettant de réduire son épaisseur car le montage des roues est plus compact et n'est plus imposé par un entraxe minimum.

Conformément à un mode de réalisation préféré, le palier à roulement est à double rangée de billes à contacts obliques ou à double rangée de rouleaux à contacts obliques. Un tel palier est connu en soi et permet une bonne résistance de l'arbre de l'accessoire aux moments de flexion et aux efforts axiaux pour un encombrement optimal. De plus l'utilisation de ce type de palier permet de réduire les jeux axiaux et ainsi d'améliorer le comportement de l'engrènement.

La paroi supportant l'axe sur lequel est montée la bague fixe peut être du côté opposé à la paroi présentant l'ouverture. La bague interne du roulement peut être fixe ou tournante, la bague externe étant alors tournante, respectivement fixe. Pour au moins une réalisation, la roue d'engrenage comprend un voile pourvu de dents d'engrenage à sa périphérie, le voile étant disposé majoritairement dans le plan médian du roulement.

Conformément à une autre caractéristique, la roue est solidaire d'un axe de connexion apte à entraîner un équipement monté sur le boîtier, l'axe de connexion étant pourvu d'un système d'entrainement en rotation tel que des cannelures internes ou des cannelures externes.

La solution de l'invention vise de préférence la majorité des roues d'engrenage qui sont alors supportées chacune par un seul roulement.

### Brève description des figures

D'autres caractéristiques et avantages ressortiront de la description qui suit d'un mode de réalisation non limitatif de l'invention en référence aux dessins annexés sur lesquels
La figure 1 représente en coupe axiale une vue partielle d'un relais d'accessoires de l'art antérieur ;
La figure 2 représente vue en coupe axiale et de trois quart arrière une partie du relais d'accessoires conforme à l'invention ;
La figure 3 représente le relais de la figure 2 vu de trois quart avant ;
La figure 4 représente le relais de la figure 2 vu de côté.

### Description détaillée d'un mode de réalisation de l'invention

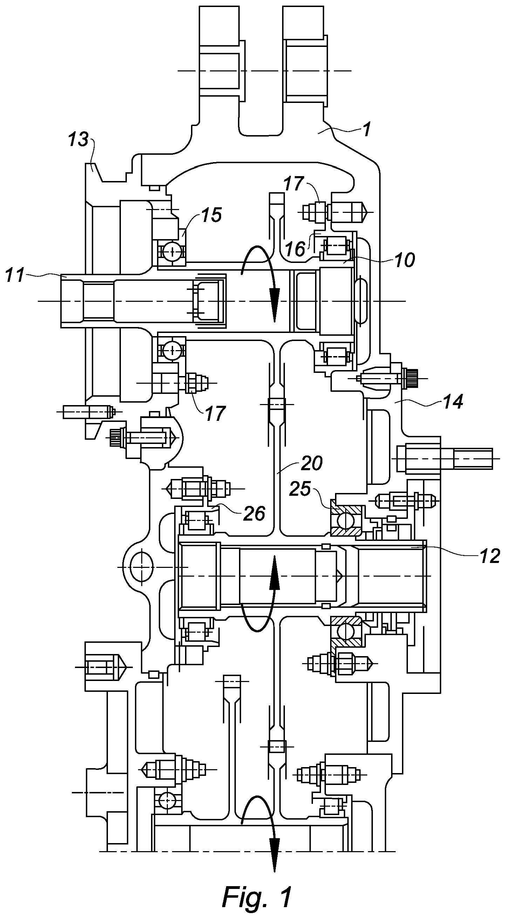

La figure 1 montre en coupe une extrémité d'un relais d'accessoires d'une turbomachine selon l'art antérieur. Il est constitué d'un boîtier, généralement venu de fonderie puis repris en usinage, dans lequel sont montés des engrenages destiné à recevoir les pignons servant à l'entrainement d'un des accessoires rattachés au relais d'accessoires. Sur la figure sont représentés deux pignons, le premier 10 est rattaché à l'arbre d'entrée 11 dans l'AGB le second pignon 20 comporte des cannelures internes 12 permettant l'entrainement d'un accessoire..

Une fois que les roues d'engrenage sont en place dans le boîtier 1, les ouvertures par lesquelles passent les axes d'entraînement des accessoires sont refermées par des couvercles de façon à assurer l'étanchéité de l'ensemble et à assurer le portage d'un des roulements de l'arbre de la roue d'engrenage. Dans le cas du premier engrenage 10, un couvercle 13 referme l'ouverture située du côté de l'arbre d'entrée 11. Pour le pignon 20, un couvercle 14 referme l'ouverture que traverse le premier arbre d'entraînement 12. On remarque sur les engrenages qu'ils sont portés par des roulements : un roulement à billes maintenu en place par le couvercle refermant l'ouverture permettant le passage de l'arbre d'entraînement correspondant et un roulement à rouleaux qui est fixé sur la paroi de fond correspondante du boîtier 1, c'est-à-dire la paroi opposée à celle dans laquelle est pratiquée l'ouverture de passage de l'arbre correspondant. La bague extérieure 15 du roulement à billes du premier engrenage 10 est ainsi fixée sur le couvercle d'arbre d'entrée 13 par des moyens du type goujons-écrous alors que la bague extérieure 16 du roulement à rouleaux de ce même premier engrenage est fixée directement sur le fond du boîtier 1, là encore par des moyens d'assemblage 17 du type goujons-écrous. Il en est de même pour le second engrenage, dont la bague extérieure 25 de son roulement à billes est fixée sur le premier couvercle d'entraînement d'accessoires 14 alors que celle 26 de son roulement à rouleaux est fixée sur le fond correspondant du boîtier 1.

Selon cet art antérieur les roues d'engrenage sont ainsi placées entre les deux roulements par lesquels l'arbre est supporté. Cette disposition permet de répartir la charge entre les roulements mais impose un écartement minimum entre les deux roulements et est sensible au désalignement entre les diamètres de centrage des roulements du carter et du couvercle. Dans d'autres cas d'application les lignes peuvent utiliser un assemblage roulement à rouleaux/ roulement à rouleaux.

On constate néanmoins que cet agencement oblige à prévoir un écartement minimum entre les parois du boîtier pour pouvoir loger la roue et les deux paliers à roulement de part et d'autre de la roue.

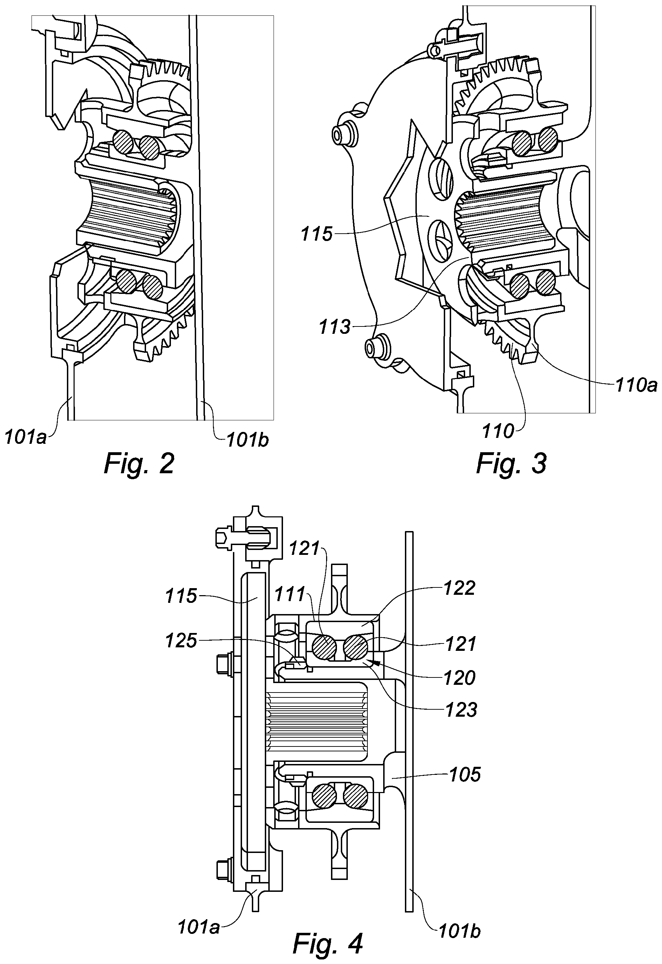

Les figures 2 à 4 montrent sous trois angles différents et en demi coupe axiale une roue d'engrenage montée conformément à l'invention ;

Le boîtier 101 du relais d'accessoires 100 conforme à l'invention et dont on ne voit qu'une partie au niveau d'une roue d'engrenage 110, comprend deux parois 101a et 101b parallèles et espacées l'une de l'autre pour le logement de la roue 110. Une paroi 101a est pourvue d'une ouverture par laquelle il est possible d'accéder à la roue. Un support tubulaire 105 est solidaire de la paroi de fond 101b opposée à l'ouverture de l'autre paroi 101a et en vis-à-vis de celle-ci. La roue d'engrenage 110 est montée à rotation sur ce support 105. La roue comprend un voile 110a avec des dents d'engrenage en périphérie.

La roue est montée sur le support tubulaire par l'intermédiaire d'un palier à roulement à double rangée de billes à contact oblique. Ce roulement 120 comprend une double rangée de billes 121, à contact oblique entre une bague extérieure 122 et une bague intérieure 123. Par exemple la bague extérieure est monobloc et la bague intérieure est constituée de deux demi-bagues intérieures, disposées côte-à-côte et axialement pré-chargées l'une contre l'autre en service. La bague extérieure 122, selon ce mode de réalisation, comprend une partie centrale et deux parties latérales formant deux pistes de roulement intérieures. Ces pistes sont réalisées sous la forme de gorges de roulement, de révolution autour de l'axe du roulement et orientées sensiblement dos-à-dos. Les gorges sont de section radiale en arc-de-cercle présentant leur concavité radialement vers l'axe du roulement et axialement chacune latéralement vers l'extérieur du roulement du côté de la partie latérale correspondante.la bague extérieure 122 et solidaire du moyeu 111 de la roue 110.

Chacune des demi-bagues intérieures comporte une piste de roulement extérieure. Les demi-bagues sont symétriques par rapport à un plan transversal médian. Les deux demi-bagues sont pré-chargées axialement l'une contre l'autre, au montage du roulement en configuration d'utilisation. Les pistes de roulement extérieures ont la forme de gorges de roulement également de révolution autour de l'axe du roulement, sont de section radiale en arc-de-cercle et la concavité de chacune est tournée radialement vers l'extérieur du roulement et axialement vers la piste de roulement extérieure de l'autre demi-bague intérieure. Les pistes de roulement extérieures de la bague intérieure 123 sont ainsi sensiblement disposées face-à-face.

Les billes 121 d'une rangée sont montées en contact roulant entre la gorge de roulement extérieure d'une première demi-bague intérieure et la gorge de roulement intérieure en regard sur la bague extérieure 122, tandis que les billes 121 de l'autre rangée sont montées en contact roulant entre la gorge de roulement extérieure de la seconde demi-bague intérieure et la gorge de roulement intérieure en regard sur la bague extérieure 122.

Les billes 121 sont ainsi montées à contact oblique, par rapport au plan médian du roulement et qui correspond au plan de contact axial des demi-bagues intérieures, lorsque le roulement est pré-chargé axialement au montage, en configuration d'utilisation. Le cas échéant des cages à billes sont prévues entre les deux bagues pour retenir les billes entre les pistes de roulement.

Dans cet exemple le plan médian de symétrie du roulement à double rangée de bille et aussi le plan du voile de la roue. Cette disposition a l'avantage de diminuer les moments de flexion vus par le roulement.

Le roulement est monté sur le support tubulaire par la bague intérieure 123, un écrou 125 par exemple maintient le roulement en place la bague intérieure étant pré-chargée.

La roue d'engrenage comprend selon ce mode de réalisation également une extension de connexion formée ici par un élément tubulaire 113 pouvant être cannelé. L'élément tubulaire de connexion est relié à la roue d'engrenage 110 par une plaque 115 transversale ajourée avec un orifice central permettant de donner accès à l'écrou 125 de serrage du roulement. Dans l'exemple représenté sur les figures l'ouverture est fermée d'un couvercle ne supportant plus de roulement.

L'agencement présenté ci-dessus permet de réduire significativement la largeur du boitier de la transmission de puissance en utilisant un ensemble de pignons supportés par des roulements uniques. Ces roulements permettent d'absorber à la fois les efforts axiaux, radiaux et les moments de basculement autour d'axes perpendiculaires à l'axe de rotation de la roue.

Le palier à roulement représenté sur les figures est à double rangée de billes à contact oblique. Selon un autre mode de réalisation non représenté le palier est à double rangée de rouleaux à contacts obliques.

## Revendications

1. Relais d'accessoires apte à entraîner les équipements accessoires d'un moteur à turbine à gaz, tel qu'un moteur d'aéronef, comprenant un boîtier et une pluralité de roues d'engrenage à l'intérieur du boîtier, le boîtier comprenant des moyens pour la fixation des équipements accessoires sur la paroi du boîtier et pour leur entraînement par les roues d'engrenages au travers d'ouvertures dans la paroi du boîtier, les roues étant supportées dans le boîtier par des paliers à roulements, chaque roulement comprenant une première bague fixe par rapport au boîtier et une bague mobile solidaire de la roue, **caractérisé par le fait qu'**au moins une (110) desdites roues d'engrenage est supportée par un seul palier à roulement (120) dont la bague fixe (123) est radialement intérieure et montée sur un axe (105) solidaire de la paroi (101b) du boîtier.

2. Relais d'accessoires selon la revendication 1 dont le palier à roulement (120) est à double rangée de billes (121) à contact oblique.

3. Relais d'accessoires selon la revendication 1 dont le palier à roulement est à double rangée de rouleaux à contact oblique.

4. Relais d'accessoires selon l'une des revendications précédentes dont la paroi supportant l'axe (105) est du côté opposé à la paroi présentant l'ouverture.

5. Relais d'accessoires selon l'une des revendications précédentes dont la roue d'engrenage (110) comprend un voile pourvu de dents d'engrenage à sa périphérie, le voile étant disposé majoritairement dans le plan médian du roulement.

6. Relais d'accessoires selon l'une des revendications précédentes dont la roue est solidaire d'un axe de connexion (113) apte à entraîner un équipement monté sur le boîtier.

7. Relais d'accessoires selon la revendication précédente dont l'axe de connexion (113) est pourvu de cannelures internes ou externes.

8. Relais d'accessoires selon l'une des revendications précédentes dont la majorité des roues d'engrenage est supportée par un seul roulement.

9. Turbomachine équipée d'un relais d'accessoires conforme à l'une des revendications précédentes.

## Patentansprüche

1. Hilfsgetriebe, das in der Lage ist, die Hilfsausrüstungen eines Gasturbinentriebwerks, wie eines Flugzeugtriebwerks, anzutreiben, umfassend ein Gehäuse und eine Vielzahl von Zahnrädern im Inneren des Gehäuses, wobei das Gehäuse Mittel zum Befestigen der Hilfsausrüstungen an der Wand des Gehäuses und für ihr Antreiben durch die Zahnräder durch Öffnungen in der Wand des Gehäuses hindurch umfasst, wobei die Räder im Gehäuse von Wälzlagern getragen werden, wobei jedes Lager einen ersten Ring umfasst, der in Bezug auf das Gehäuse fest ist, und einen beweglichen Ring, der fest mit dem Rad verbundenen ist, **dadurch gekennzeichnet, dass** mindestens eines (110) der Zahnräder von einem einzigen Wälzlager (120) getragen wird, dessen fester Ring (123) radial innen liegt und auf einer Achse (105) montiert ist, die fest mit der Wand (101b) des Gehäuses verbunden ist.

2. Hilfsgetriebe nach Anspruch 1, wobei das Wälzlager (120) ein zweireihiges Schrägkugellager (121) ist.

3. Hilfsgetriebe nach Anspruch 1, wobei das Wälzlager ein zweireihiges Schrägrollenlager ist.

4. Hilfsgetriebe nach einem der vorstehenden Ansprüche, wobei die Wand, die die Achse (105) trägt, auf der gegenüberliegenden Seite der Wand liegt, die die Öffnung aufweist.

5. Hilfsgetriebe nach einem der vorstehenden Ansprüche, wobei das Zahnrad (110) eine Bahn umfasst, die an ihrem Umfang mit Zahnradzähnen versehen ist, wobei die Bahn mehrheitlich in der Mittelebene des Lagers angeordnet ist.

6. Hilfsgetriebe nach einem der vorstehenden Ansprüche, wobei das Rad fest mit einer Verbindungsachse (113) verbunden ist, die in der Lage ist, eine Ausrüstung, die auf dem Gehäuse montiert ist, anzutreiben.

7. Hilfsgetriebe nach dem vorstehenden Anspruch, wobei die Verbindungsachse (113) mit Innen- oder Außenkeilverzahnungen versehen ist.

8. Hilfsgetriebe nach einem der vorstehenden Ansprüche, wobei die Mehrheit der Zahnräder von einem einzigen Lager getragen wird.

9. Turbomaschine, die mit einem Hilfsgetriebe gemäß einem der vorstehenden Ansprüche ausgerüstet ist.

## Claims

1. Accessory gearbox that is able to drive the accessory equipment of a gas turbine engine, such as an aircraft engine, comprising a housing and a plurality of gear wheels inside the housing, the housing comprising means for fixing accessory equipment to the wall of the housing and for the driving thereof by the gear wheels through openings in the wall of the housing, the gears being supported in the housing by roller bearings, each bearing comprising a first race fixed with respect to the housing and a movable race secured to the gear, **characterised in that** at least one of said gear wheels (110) is supported by a single roller bearing (120), the fixed race (123) of which is radially inner and mounted on a shaft (105) secured to the wall of the housing (101b).

2. Accessory gearbox according to claim 1, wherein the roller bearing (120) has a double row of oblique-contact balls (121).

3. Accessory gearbox according to claim 1, wherein the roller bearing has a double row of oblique-contact rollers.

4. Accessory gearbox according to any of the preceding claims, wherein the wall supporting the shaft (105) is on the side opposite the wall having the opening.

5. Accessory gearbox according to any of the preceding claims, wherein the gear wheel (110) comprises a web provided with gear teeth at its periphery, the web being disposed mainly in the midplane of the bearing.

6. Accessory gearbox according to any of the preceding claims, wherein the gear wheel is secured to a connection shaft (113) that is able to drive an item of equipment mounted on the housing.

7. Accessory gearbox according to the preceding claim, wherein the connection shaft (113) is provided with internal or external splines.

8. Accessory gearbox according to any of the preceding claims, wherein the majority of the gear wheels are supported by a single bearing.

9. Turbine engine equipped with an accessory gearbox according to any of the preceding claims.
